(19) Europäisches Patentamt / European Patent Office / Office européen des brevets

(11) **EP 4 092 386 B1**

(12) **EUROPEAN PATENT SPECIFICATION**

(45) Date of publication and mention
of the grant of the patent:
**29.04.2026   Bulletin 2026/18**

(21) Application number: **20914423.7**

(22) Date of filing: **17.01.2020**

(51) International Patent Classification (IPC):
**G01C 21/34** (2006.01)     **G08G 1/01** (2006.01)
**G08G 1/16** (2006.01)       **B60W 30/095** (2012.01)
**G05D 1/00** (2024.01)

(52) Cooperative Patent Classification (CPC):
**G01C 21/3446; B60W 30/0956; G05D 1/0217;
G05D 1/0274;** B60W 2552/53; B60W 2554/801;
B60W 2554/802; B60W 2556/20

(86) International application number:
**PCT/CN2020/072834**

(87) International publication number:
**WO 2021/142793 (22.07.2021 Gazette 2021/29)**

(54) **PATH PLANNING METHOD AND PATH PLANNING APPARATUS**

WEGPLANUNGSVERFAHREN UND WEGPLANUNGSGERÄT

PROCÉDÉ DE PLANIFICATION DE TRAJET ET APPAREIL DE PLANIFICATION DE TRAJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.11.2022   Bulletin 2022/47**

(73) Proprietor: **Shenzhen Yinwang Intelligent
Technologies Co., Ltd.
Shenzhen, Guangdong 518129 (CN)**

(72) Inventors:
• **LIU, Yalin**
  **Shenzhen, Guangdong 518129 (CN)**
• **CAO, Haotian**
  **Changsha, Hunan 410082 (CN)**
• **SONG, Xiaolin**
  **Changsha, Hunan 410082 (CN)**

(74) Representative: **Pfenning, Meinig & Partner mbB
Patent- und Rechtsanwälte
Theresienhöhe 11a
80339 München (DE)**

(56) References cited:
**CN-A- 109 324 620    CN-A- 110 111 566
CN-A- 110 189 547    US-A1- 2015 029 092**

US-B1- 9 721 383      US-B2- 9 857 876

• ZHANG YAJIA ET AL: "Optimal Trajectory
  Generation for Autonomous Vehicles Under
  Centripetal Acceleration Constraints for In-lane
  Driving Scenarios", 2019 IEEE INTELLIGENT
  TRANSPORTATION SYSTEMS CONFERENCE
  (ITSC), IEEE, 27 October 2019 (2019-10-27),
  pages 3619 - 3626, XP033668283, DOI: 10.1109/
  ITSC.2019.8916917
• CHEN HUAKANG ET AL: "An Improved Local
  Dynamic Path Planning Algorithm for
  Autonomous Driving", 2019 IEEE
  INTERNATIONAL CONFERENCE ON ROBOTICS
  AND BIOMIMETICS (ROBIO), IEEE, 6 December
  2019 (2019-12-06), pages 2879 - 2884,
  XP033691521, DOI: 10.1109/
  ROBIO49542.2019.8961468
• XIAO, HONGYU ET AL.: "Obstacle Avoidance
  Planning for Low-Speed Autonomous Ground
  Vehicles", JOURNAL OF TONGJI
  UNIVERSITY(NATURAL SCIENCE), vol. 47, no.
  S1, 31 December 2019 (2019-12-31), pages 164 -
  170, XP055830187, ISSN: 0253-374x

EP 4 092 386 B1

- **DU, ZHUOYANG: "Research on Trajectory Planning Algorithms of Autonomous Driving Vehicles", SCIENCE & ENGINEERING (B), CHINA MASTER'S THESES FULL-TEXT DATABASE, no. 8, 31 August 2019 (2019-08-31), pages 1 - 101, XP055830190, ISSN: 1674-0246**

## Description

### TECHNICAL FIELD

This application relates to the field of intelligent driving, and in particular, to a path planning method and a path planning apparatus.

### BACKGROUND

Unmanned driving is an important part of an intelligent transportation system. After receiving various perception information from a sensor, an unmanned vehicle (a UV for short) analyzes current environment, and then delivers instructions to a bottom-layer control module. This process is a main task of a decision-making and planning module. The decision-making and planning module is mainly configured to plan an obstacle avoidance path. To be specific, a pre-planned driving path is adjusted with reference to real-time traffic information, to avoid a collision with an obstacle.

During planning of the obstacle avoidance path, a single-source shortest path (Dijkstra) algorithm, an A* algorithm, and a rapidly-exploring random tree (RRT) algorithm are usually used. The RRT algorithm is used as an example, a tree structure is expanded outward from a starting point, and an expansion direction of the tree structure is determined by using random sampling points in planned space.

In the conventional technology, when the obstacle avoidance path is planned based on the RRT algorithm, because path sampling points are randomly distributed, smoothness of the planned path cannot be ensured. Therefore, quality of the path generated by using the RRT algorithm is relatively low.

The following publication discloses a trajectory generation based on a two-phase optimization procedure: ZHANG YAJIA ET AL:"Optimal Trajectory Generation for Autonomous Vehicles Under Centripetal Acceleration Constraints for In-lane Driving Scenarios", 2019 IEEE INTELLIGENT TRANSPORTATION SYSTEMS, CONFERENCE (ITSC), IEEE, 27 October 2019 (2019-10-27), pages 3619-3626 XP033668283, DOI: 10.1109/ITSC.2019.8916917.

### SUMMARY

Embodiments of this application provide a path planning method, to implement planning of an obstacle avoidance path, so that quality of a planned path can be improved.

A method according to the invention is provided in appended claim 1.

According to the path planning method, the path quality indicator function is determined based on the mapping relationship between the Cartesian coordinate system and the Frenet coordinate system, the target path based on the Frenet coordinate system is obtained by using a quadratic programming solution method, and the target path is converted into the Cartesian coordinate system based on the mapping relationship, to perform path planning and control. By using the path method, quality of the target path can be improved. A quadratic path quality indicator function is determined based on the mapping relationship between the Cartesian coordinate system and the Frenet coordinate system, and the target path is determined by using optimal quadratic programming. Therefore, operations can be simplified, a path planning speed can be improved, and a real-time operation requirement can be met.

In a possible implementation of the first aspect, the determining a target path based on the Frenet coordinate system by using quadratic programming and based on the path quality indicator function based on the Frenet coordinate system, the initial location of the target object, and the destination location includes: determining a road boundary constraint condition based on the road information; and under constraint of the road boundary constraint condition, determining the target path based on the Frenet coordinate system by using a quadratic programming solution method.

According to the path planning method provided in this embodiment of this application, when the target path is determined by using the quadratic programming solution method, calculation can be performed based on the road boundary constraint condition determined based on the road information.

In a possible implementation of the first aspect, the method further includes: obtaining obstacle information. The determining a target path based on the Frenet coordinate system by using quadratic programming and based on the path quality indicator function based on the Frenet coordinate system, the initial location of the target object, and the destination location includes: under an obstacle constraint condition determined based on the obstacle information, determining the target path based on the Frenet coordinate system by using the

The obstacle constraint condition is that in a range in which a distance between a path point on the target path and an obstacle is less than or equal to a preset length along a longitudinal direction of a road, a horizontal distance between the path point on the target path and the obstacle needs to be greater than or equal to a preset threshold, that is, in a longitudinal interval, a horizontal safety distance from the obstacle needs to be ensured. This safety distance is a preset value. In this way, obstacle collision risks of the determined target path are low, and a safety degree of the target path is improved.

According to the path planning method provided in this embodiment of this application, if there is the obstacle on the road, when the target path is determined by using the quadratic programming solution method, calculation can be performed under the obstacle constraint condition determined based on the obstacle information. The determined target path has relatively high path quality, and can meet an obstacle avoidance requirement.

In a possible implementation of the first aspect, the determining a target path based on the Frenet coordinate system by using quadratic programming and based on the path quality indicator function based on the Frenet coordinate system, the initial location of the target object, and the destination location includes: determining a plurality of control nodes on the target path by using the quadratic programming solution method; and determining, based on the plurality of control nodes and in a manner of interpolation, any path point other than the plurality of control nodes on the target path. The control nodes on the target path are sampling points on the target path, and a quantity of sampling points is not limited.

According to the path planning method provided in this embodiment of this application, when the target path is determined, locations of the plurality of control nodes on the target path may be first determined, and then any path point between the control nodes is determined in the manner of interpolation.

In a possible implementation of the first aspect, the manner of interpolation includes natural cubic spline curve interpolation.

According to the path planning method provided in this embodiment of this application, when the path point between the control nodes is determined in the manner of interpolation, natural cubic spline curve interpolation can be used. According to the path planning method provided in this embodiment of this application, when the path point is calculated through natural cubic spline curve interpolation, because of a property of a natural cubic spline curve, adjacent spline curve segments have the same slopes and the same curvatures on the control nodes. Therefore, calculation can be simplified, and all path quality indicators are represented as quadratic, that is, an optimization object is represented as quadratic.

In a possible implementation of the method, the path quality indicator function includes one or a combination of a path length function, a curvature function, a course angle error function, a curvature change rate function, and a course angle error change rate function.

According to the path planning method provided in this embodiment of this application, the path quality indicator function may have a plurality of combined structural forms, and may be flexibly set according to an actual requirement, to improve quality of the target path, and make an obtained target path more suitable for an actual motion scenario of a moving target object.

According to the path planning method, when the optimization target is determined based on a plurality of path quality indicators, weights may be set based on importance degrees of different quality indicators.

The Cartesian coordinate system includes a vehicle body coordinate system, a topocentric coordinate system, or a world coordinate system.

A path planning apparatus according to appended claim 9 is also provided.

In a possible implementation of the apparatus, the determining module is specifically configured to determine a road boundary constraint condition based on the road information, and under constraint of the road boundary constraint condition, determine the target path based on the Frenet coordinate system by using a quadratic programming solution method.

In a possible implementation of theapparatus, the obtaining module is further configured to obtain obstacle information; and the determining module is specifically configured to determine, under an obstacle constraint condition determined based on the obstacle information, the target path based on the Frenet coordinate system by using the quadratic programming solution method.

In a possible implementation of the apparatus, the determining module is specifically configured to determine a plurality of control nodes on the target path by using the quadratic programming solution method, and determine, based on the plurality of control nodes and in a manner of interpolation, any path point other than the plurality of control nodes on the target path.

A path planning apparatus according to appended claim 13 is also provided, which includes a path planning apparatus, including a processor and a memory. The processor and the memory are connected to each other, the memory is configured to store a computer program, the computer program includes program instructions, and the processor is configured to invoke the program instructions to perform the method according to any one of the first aspect and the

A computer program product according to appended claim 14 is provided. s. When the computer program product is run on a computer, the computer is enabled to perform the method according to any one of the first aspect and the possible implementations.

A computer-readable storage medium including instructions according to appended claim 15 is provided. When the instructions are run on a computer, the computer is enabled to perform the method according to any one of the first aspect and the possible implementations.

In the path planning method provided in the embodiments of this application, the quadratic path quality indicator function is constructed by using the mapping relationship between the Cartesian coordinate system and the Frenet coordinate system, and then the target path based on the Frenet coordinate system is determined by using the quadratic programming solution method, and is finally converted into the Cartesian coordinate system. The target path is used for path planning and control of the target object. A path is conveniently described by using the Frenet coordinate system, calculation is performed in the Cartesian coordinate system based on the mapping relationship, and the target path is determined by using the quadratic programming solution method. This can reduce a calculation amount and improve a path planning speed compared with an existing RRT algorithm.

## BRIEF DESCRIPTION OF DRAWINGS

FIG. 1 is a schematic diagram of describing a location of a vehicle on a road based on a Cartesian coordinate system;

FIG. 2 is a schematic diagram of describing a location of a vehicle on a road based on a Frenet coordinate system;

FIG. 3 is a schematic diagram of a system architecture of a path planning method according to an

FIG. 4 is a schematic diagram of an embodiment of a path planning method according to the invention;

FIG. 5 is a schematic diagram of a mapping relationship between a Cartesian coordinate system and a to the invention; Frenet coordinate system according

FIG. 6 is a schematic diagram of an embodiment of an obstacle avoidance constraint according to the invention;

FIG. 7 is a schematic diagram of a target path according to the invention;

FIG. 8 is a schematic diagram of an embodiment of a path planning apparatus according to the invention; and

FIG. 9 is a schematic diagram of an embodiment of a path planning apparatus according to the invention.

## DESCRIPTION OF EMBODIMENTS

Embodiments of this application provide a path planning method, to implement planning of an obstacle avoidance path, so that quality of a planned path can be improved.

Embodiments of the present invention may be applied to motion of various moving target objects (including motor vehicles, non-motor vehicles, pedestrians, robots, or the like) on various forms of paths (including highways, urban roads, rural roads, indoor paths, or the like). In subsequent embodiments, a vehicle or a lane is used as an example for description, but a person skilled in the art may extend a path planning field of the vehicle or the lane to a path planning field of another target object. This is not specifically limited herein.

In embodiments of this application, it is assumed that an unmanned vehicle drives on a structured road, and an actual application scenario may include a multi-lane scenario. In the multi-lane scenario, no matter which lane the unmanned vehicle is located on, the unmanned vehicle can only change to an adjacent lane in a driving process according to a traffic rule, that is, the unmanned vehicle can only change to a left lane or a right lane. Therefore, a multi-lane on which the unmanned vehicle drives can be simplified into a dual-lane model. In this embodiment of this application, the dual-lane model is used as an example for description. It may be understood that this does not constitute a limitation on a scenario in which the solution is implemented.

For ease of understanding, the following briefly describes some technical terms in this application.

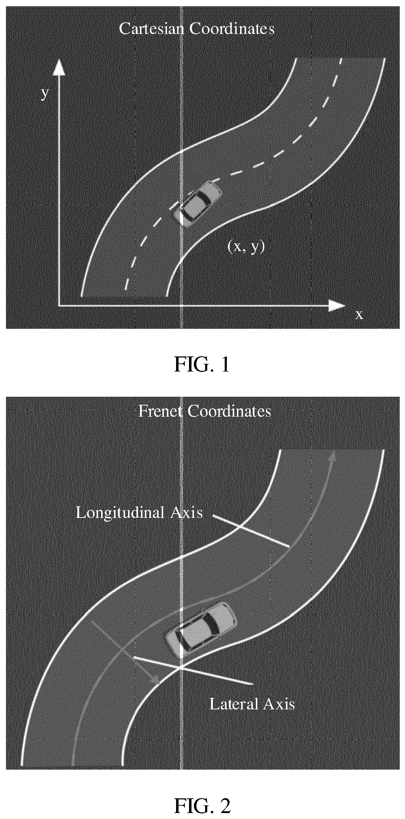

Cartesian coordinate system: The Cartesian coordinate system is usually used to describe a location of an object. FIG. 1 is a schematic diagram of describing a location of a vehicle on a road based on the Cartesian coordinate system. It is not difficult to find that the Cartesian coordinate system is not the best choice for describing a location of a vehicle path on a road. Because even if location coordinates (x, y) of the vehicle are given, a driving distance of the vehicle and a distance that deviates from a lane center cannot be intuitively determined.

Frenet coordinate system: The Frenet coordinate system may resolve some problems when a location of a vehicle on a road is described by a Cartesian coordinate system. FIG. 2 is a schematic diagram of describing a location of a vehicle on a road based on the Frenet coordinate system. In the Frenet coordinate system, a vertical coordinate s indicates a length of a road centerline, the road centerline is also referred to as a road reference line, s represents a longitudinal distance along a direction of the road centerline in Frenet coordinates, and the longitudinal distance is also referred to as a mileage; and a horizontal coordinate d represents a normal displacement from the road centerline. Although the Frenet coordinate system can conveniently describe the location of the vehicle on the road, a complex derivative operation is involved in a path quality evaluation, and a complex first or second derivative operation is involved in a path quality description. Therefore, in the Frenet coordinate system, it is difficult to construct path quality indicators such as quadratic optimization items of a curvature and a course angle. Comprehensive path quality indicators including a length, the curvature, and a path course error are not high, and path quality evaluation calculations are very complex in the Frenet coordinate system.

Natural cubic spline curve: Two adjacent curve segments have the same first derivatives and the same second derivatives at a common boundary (a control point), that is, a natural cubic spline has continuity of second derivatives.

Path quality: In an existing path planning method, obstacle avoidance planning is usually performed based on given obstacle information, but path quality indicators are seldom considered. The path quality has great impact on driving efficiency on a road and comfort of a passenger when an unmanned vehicle changes a lane to avoid an obstacle. In this application, the path quality indicators used to evaluate the path quality include but are not limited to a path length, the curvature, a course angle error, a curvature change rate, and a course angle error change rate.

Quadratic programming (Quadratic programming) is a special type of optimization problem.

The following describes embodiments of this application with reference to the accompanying drawings. It is clear that the described embodiments are merely a part rather than all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in appropriate circumstances, so that the embodiments described herein can be implemented in other orders than the order illustrated or described herein. In addition, the terms "include" and "have" and any variations thereof are intended to cover non-exclusive inclusions, for example, a process, method, system, product, or device including a series of steps or modules need not be limited to those clearly listed steps or modules, but may include other steps or modules that are not clearly listed or are inherent to these processes, methods, products, or devices. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved.

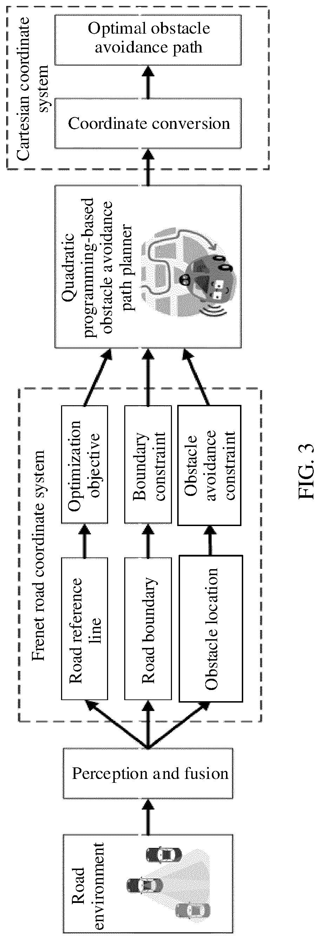

FIG. 3 is a schematic diagram of a system architecture of a path planning method according to an embodiment of this application.

This application describes a scenario of autonomous obstacle avoidance of an intelligent vehicle on a road. After a road centerline location and obstacle location information that are obtained through fusion performed by a vehicle sensor are input to a system, the system outputs an optimal obstacle avoidance path that is obtained by using an optimal quadratic programming solution method and by combining a Cartesian coordinate system with a Frenet road coordinate system. The system architecture is shown in FIG. 3.

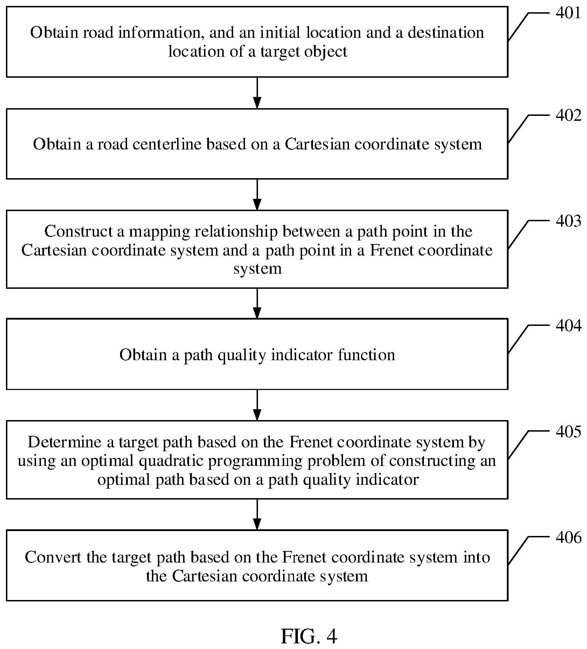

FIG. 4 is a schematic diagram of an embodiment of a path planning method according to an embodiment of this application.

401. Obtain road information, an initial location of a target object, and a destination location.

A path planning apparatus obtains the road information. The road information can be obtained through a high definition map and precise positioning of a vehicle. A specific manner of obtaining the road information is not limited herein.

Optionally, the path planning apparatus further obtains obstacle information. The obstacle information can be captured by a vehicle sensor, for example, a laser radar or an inertial navigation system (IMU). A specific manner of obtaining the obstacle information is not limited herein.

In addition, the path planning apparatus further obtains the initial location of the target object and the destination location of the target object.

It should be noted that the path planning apparatus can simultaneously or separately obtain the road information, the initial location of the target object, and the destination location of the target object. If the path planning apparatus separately obtains the road information, the initial location of the target object, and the destination location of the target object, an execution sequence of obtaining the road information, the initial location of the target object, and the destination location of the target object is not limited.

402. Obtain a road centerline that is based on a Cartesian coordinate system.

A Frenet coordinate system is constructed based on a road reference line (reference line), and the road reference line may be, for example, the road centerline.

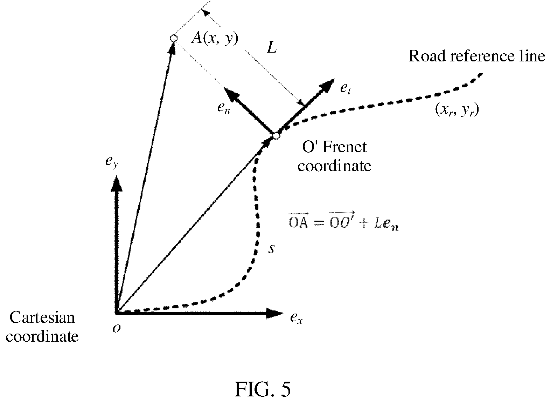

Optionally, refer to FIG. 5, and a dashed line is the road centerline. Based on N sampling points on the road centerline, a function formula $\begin{cases} x_r = f_{rx}(s) \\ y_r = f_{ry}(s) \end{cases}$ of the road centerline $(x_r, y_r)$ can be obtained in a manner of interpolation. In the formula, $(x_r, y_r)$ are Cartesian coordinates, and $f_{rx}$ and $f_{ry}$ each are a function of a centerline length s, namely, a longitudinal distance along the reference line in Frenet coordinates.

Optionally, coordinates of an obstacle in the Cartesian coordinate system are determined.

403. Construct a mapping relationship between a path point in the Cartesian coordinate system and a path point in the Frenet coordinate system.

Continue to refer to FIG. 5. Optionally, for ease of calculation, a point O on the road centerline may be defined as an origin of the Frenet coordinate system and an origin of the Cartesian coordinate system. The point O may be a point at which a position of the vehicle at a current moment when the vehicle obtains the road information is projected to the road centerline in a normal direction of the road centerline. A location of the origin of the Frenet coordinate system is not specifically limited herein.

A point A represents any path point on a road. Coordinates of the point A in the Cartesian coordinate system are (x, y), and coordinates of the point A in the Frenet coordinate system are (s, L). The point A is projected, along the road centerline, to a point O' on the road centerline in a normal direction, $e_x$ is a horizontal unit vector in the Cartesian coordinate system, and $e_y$ is a vertical unit vector in the Cartesian coordinate system.

A normal unit vector $\boldsymbol{e_n}$ of the path point in the Frenet coordinate system is obtained according to a function formula of the road centerline in the Cartesian coordinate system. $\boldsymbol{e_n}$ can be expressed as a function $e_n(s)$ of s. The expression is as follows:

$$e_n(s) = \frac{-f_{ry}'(s)}{\sqrt{f_{rx}'^2(s) + f_{ry}'^2(s)}} e_x + \frac{f_{rx}'(s)}{\sqrt{f_{rx}'^2(s) + f_{ry}'^2(s)}} e_y \qquad (1)$$

Then, according to a vector relationship shown in FIG. 5, a mutual conversion relationship between the Frenet coordinates (s, L) and the Cartesian coordinates (x, y) of the point A can be obtained:

$$x(s) = x_r(s) - \frac{L f_{ry}'(s)}{\sqrt{f_{rx}'^2(s) + f_{ry}'^2(s)}}$$

$$y(s) = y_r(s) + \frac{L f_{cx}'(s)}{\sqrt{f_{rx}'^2(s) + f_{ry}'^2(s)}} \qquad (2)$$

In the formula, $x_r$ of the road centerline $(x_r, y_r)$ may be expressed as a function $x_r(s)$ of s, and $x_r(s) = f_{rx}(s)$, Similarly, $y_r$ may be expressed as a function $y_r(s)$ of s, and $y_r(s) = f_{ry}(s)$.

Optionally, Frenet coordinates of the obstacle can be obtained.

404. Obtain a path quality indicator function.

An objective of path optimization is to improve path quality. Specifically, one or more path quality indicators may be improved. The path quality indicator includes a path length, a course angle error, a curvature, a curvature change rate, a course angle error change rate, or the like. This is not specifically limited herein. Optionally, in the following, that the path quality indicator function includes a path length function, a curvature function, and a course angle error function is used as an example for description.

Cartesian coordinates and Frenet coordinates are combined to describe the path length, the curvature, and a course angle.

Optionally, it is assumed that a path curve $\varepsilon(s) = [X(S), Y(S)]$ includes n + 1 control nodes, and longitudinal distances between the control nodes are evenly distributed, that is, Frenet vertical coordinates of the control nodes are in an arithmetic sequence. A location of any path point (X, Y) between the control nodes can be obtained based on each control node, a spline curve, and the like. A specific method is not limited herein. In the following, that the location of the path point (X, Y) is obtained through natural cubic spline curve interpolation relative to the length s of the road centerline is used as an example for description.

A natural cubic spline curve means that in a cubic spline curve, adjacent spline curve segments have the same slopes and the same curvatures on the control nodes. To be specific, a first derivative and a second derivative of a natural spline curve **Z** at each control node may be expressed as a linear relation about coordinates of the control node, namely,

$$\begin{cases} \left.\dfrac{\mathrm{d}Z(s)}{\mathrm{d}s}\right|_{s=0} = \mathbf{G}Z \\[2mm] \left.\dfrac{\mathrm{d}^2 Z(s)}{\mathrm{d}s^2}\right|_{s=0} = \mathbf{H}Z \end{cases} \tag{3}$$

In the formula, Z is a function of s and may be expressed as Z(s), and both **G** and **H** are constant matrices.

Based on a conversion relationship between the Frenet coordinates and the Cartesian coordinates, the location of the path point (X, Y) in the Cartesian coordinate system may be written in the form of a matrix below. In the formula, a horizontal coordinate X may be expressed as a function X(s) of s, and a vertical coordinate Y may be expressed as a function Y(s) of s. Expressions of X(s) and Y(s) are as follows:

$$\begin{cases} X(s) = X_r(S) + \mathbf{diag}[\{\chi_i(S_i)\}]L \\ Y(s) = Y_r(S) + \mathbf{diag}[\{\sigma_i(S_i)\}]L \end{cases} \tag{4}$$

In the formula, $\boldsymbol{L} = [L_1\, L_2 \cdots L_n\, L_{n+1}]^T$ is a path decision vector, L1 represents a normal displacement between a first control node and the road centerline, and similarly, Ln represents a normal displacement between an $n^{th}$ control node and the road centerline. Details are not described again.

$S = [S_1\, S_2 \cdots S_n\, S_{n+1}]$. In the formula, a capital $\boldsymbol{S}$ is a vertical distance vector corresponding to a path decision vector L, i represents an $i^{th}$ control node, and $\boldsymbol{S_i}$ represents a length of a road centerline corresponding to a control node i.

$$X_r(S) = [x_r(S_1)\ x_r(S_2) \cdots\ x_r(S_n)\ \ x_r(S_{n+1})]$$

Similarly, $\boldsymbol{Y_r(S)} = [y_r(S_1)\, y_r(S_2) \cdots y_r(S_n)\, y_r(S_{n+1})]$.

In the formula, $\boldsymbol{X_r(S)}$ is a horizontal coordinate, in the Cartesian coordinate system, of a point that is on the road centerline and that corresponds to the path point, and may be expressed as a function of $\boldsymbol{S}$, namely, $\boldsymbol{X_r(S)} = f_{rx}(\boldsymbol{S})$; and $\boldsymbol{Y_r}$ ($\boldsymbol{S}$) is a vertical coordinate, in the Cartesian coordinate system, of the point that is on the road centerline and that corresponds to the path point, and may be expressed as a function of $\boldsymbol{S}$, namely, $\boldsymbol{Y_r(S)} = f_{ry}(\boldsymbol{S})$.

**diag**[·] indicates a diagonal matrix generated based on an AND element in brackets, and

$$\chi_i = -\frac{f_{ry}'(S_i)}{\sqrt{f_{rx}'^2(S_i) + f_{ry}'^2(S_i)}}, \sigma_i = \frac{f_{rx}'(S_i)}{\sqrt{f_{rx}'^2(S_i) + f_{ry}'^2(S_i)}}$$

Based on a property of the natural cubic spline curve, path quality indicators of a path curve $\varepsilon(s) = [X(S), Y(S)]$ may be expressed as quadratic functions in a Frenet coordinate system. The following separately describes the path quality indicators.

(1) Path length

Conversion relationships between Frenet coordinates and Cartesian coordinates of a spacing between adjacent control nodes are as follows:

$$\begin{aligned} \Delta X_i &= X_{i+1} - X_i = (X_{r,i+1} - X_{r,i}) + (\chi_{i+1}L_{i+1} - \chi_i L_i) = \Delta X_{ri} + \alpha_i \bar{L}_i \\ \Delta Y_i &= Y_{i+1} - Y_i = (Y_{r,i+1} - Y_{r,i}) + (\sigma_{i+1}L_{i+1} - \sigma_i L_i) = \Delta Y_{ri} + \beta_i \bar{L}_i \end{aligned} \tag{5}$$

In the formula, $\alpha_i = [^-\chi_i\, \chi_{i+1}]$, $\beta_i = [^-\sigma_i\, \sigma_{i+1}]$, $\bar{L}_i = [L_i\, L_{i+1}]^T$.

$\Delta X_i$ indicates a Cartesian horizontal coordinate spacing between the adjacent control nodes, $\Delta Y_i$ indicates a Cartesian horizontal coordinate spacing between the adjacent control nodes, $L_i$ indicates a Frenet horizontal coordinate of a control node i, a positive value is on the left of a reference line, a negative value is on the right of the reference line, $\bar{L}_i$, represents an average value of Frenet horizontal coordinates of the adjacent control nodes, $\Delta X_{ri}$ indicates a Frenet horizontal coordinate spacing between the adjacent control nodes, and $\Delta Y_{ri}$ indicates a Frenet vertical coordinate spacing between the adjacent control nodes.

A quadratic term of a path length between adjacent path control points is as follows:

$$B^2(\text{s}) = (\Delta X_i)^2 + (\Delta Y_i)^2 = (\Delta X_{ri} + \alpha_i \bar{L}_i)^2 + (\Delta Y_{ri} + \beta_i \bar{L}_i)^2 \quad (6)$$

A function expression of a quadratic term of a path length of an entire path is as follows:

$$S^2 = \sum_{i=1}^{n} B^2{}_i = \sum_{i=1}^{n} (\Delta X_{ri} + \alpha_i \bar{L}_i)^2 + (\Delta Y_{ri} + \beta_i \bar{L}_i)^2 = L^T K L + M L + cost \quad (7)$$

In the expression, a constant matrix $g$ satisfies $\bar{L} = gL$ (for a specific form, refer to an example), and Cost represents a constant term unrelated to the path decision vector L; and

$$\mathbf{K} = g^T \mathbf{diag}\big[\alpha_i{}^T \alpha_i + \beta_i{}^T \beta_i\big] g, \mathbf{M} = 2\Delta^T \mathbf{diag}[\gamma_i] g, \gamma_i = [\alpha_i \quad \beta_i]^T, \Delta_i = [\Delta X_{ri} \quad \Delta Y_{ri}]^T$$

(2) Path curvature

According to a definition of a curvature, a quadratic term $\kappa^2$ of a curvature at a control point on a path may be expressed as a function $\kappa^2(S)$ of S, and a calculation formula is as follows:

$$\kappa^2(S) = \|\varepsilon''(S)\|^2 = \left(\frac{d^2 X(S)}{dS^2}\right)^2 + \left(\frac{d^2 Y(S)}{dS^2}\right)^2 \quad (8)$$

According to a property of a natural cubic spline curve, for nodes on the entire path, there are:

$$\left.\frac{d^2 X(S)}{dS^2}\right|_{s=0} = HX = HX_r + H diag[\chi_i]L \quad (9)$$

$$\left(\frac{d^2 X(S)}{dS^2}\right)^2 = X_r{}^T (H^T H)X_r + L^T (H^T H) diag[\chi_i{}^2]L + 2\big(X_r{}^T H^T H\big) diag[\chi_i]L \quad (10)$$

Likewise, the following may be obtained:

$$\left(\frac{d^2 Y(S)}{dS^2}\right)^2 = Y_r{}^T (H^T H)Y_r + L^T (H^T H) diag[\sigma_i{}^2]L + 2\big(Y_r{}^T H^T H\big) diag[\sigma_i]L \quad (11)$$

Finally, a function expression of a quadratic term of a path curvature of the entire path is as follows:

$$K^2 = \sum_{i=1}^{n+1} \kappa^2{}_i = X^T H^T H X + Y^T H^T H Y = L^T N L + T L + cost \quad (12)$$

In the expression,

$$N = H^T H$$

$$T = 2\big(X_r{}^T H^T H\big) diag[\chi_i] + 2\big(Y_r{}^T H^T H\big) diag[\sigma_i]$$

Cost represents a constant term unrelated to the path decision vector L.

(3) Path course angle error

A course angle $\vartheta$ of a path at a control node may be approximately a slope of a connection line between adjacent path control points. An error $\Delta\vartheta$ between the course angle of the control node and a course angle $\vartheta_r$ of the road centerline may be expressed as a function $\Delta\vartheta(S)$ of S, and a calculation formula is approximately expressed as:

$$\Delta\vartheta(S) \approx \frac{\Delta Y}{\Delta S} - \vartheta_r(S) \approx \frac{dY}{dS} - \vartheta_r(S) = \boldsymbol{GY} - \vartheta_r(S) \qquad (13)$$

Therefore, a quadratic function expression of a course angle error of the entire path is as follows:

$$P^2 = \sum_{i=1}^{n+1} (\Delta\vartheta_i)^2 = (\boldsymbol{GY} - \boldsymbol{\vartheta_r})^2 = \boldsymbol{L^T QL} + \boldsymbol{PL} + cost \qquad (14)$$

In the expression, $\boldsymbol{Q} = \boldsymbol{G^T G}, \boldsymbol{P} = 2\vartheta_r{}^T\boldsymbol{G}$;

Cost represents a constant term unrelated to the path decision vector L.

405. Determine, based on the path quality indicator function, a target path based on the Frenet coordinate system by using optimal quadratic programming.

To generate a path suitable for vehicle driving, by separately considering the path length, the curvature, and the course angle error, the following conditions need to be met:

(1) a shortest driving path, where the path length is as short as possible, to help save time and fuel consumption;
(2) an optimal curvature, where a path curvature to be obtained is as small as possible, to avoid occurrence of a dangerous condition caused by a large-curvature path; and
(3) an optimal path course angle, where a deviation $\Delta\vartheta_i$ between a course angle $\vartheta_i$ at a path node and a course angle $\vartheta_{ri}$ of the road centerline is as small as possible, the course angle $\vartheta_i$ at the path node is a course angle obtained when a vehicle drives to a path node i along a candidate path, and the course angle $\vartheta_{ri}$ of the road centerline is a course angle obtained when the vehicle drives along the road reference line.

To achieve the foregoing objective, an optimization objective is constructed based on the path quality indicator function, that is, an optimal quadratic programming (Quadratic Programing, QP) problem shown in the following:

$$\text{Minimize } \Sigma^2 = p_1 S^2 + p_2 K^2 + p_3 P^2 \qquad (15 - 1)$$

In the formula, $p_1, p_2, p_3$, are corresponding weight items, and specific values are not limited herein.

A path that meets the optimization objective of formula 15-1 is the target path.

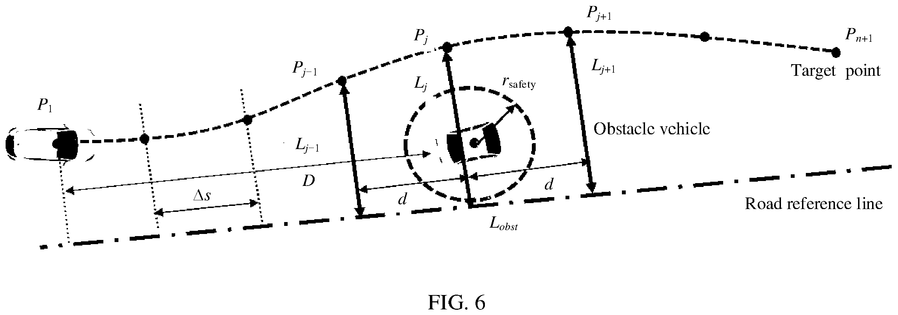

Optionally, if there is an obstacle, to ensure that a host vehicle does not collide with the obstacle in an obstacle avoidance process, an obstacle avoidance constraint further needs to be added. FIG. 6 is a schematic diagram of an embodiment of the obstacle avoidance constraint according to this embodiment of this application. Control points $P_j, j \approx [D/\Delta S]$ closest to the obstacle are approximately estimated based on a current location relationship. In the formula, D indicates a spacing between the host vehicle and an obstacle vehicle, and $\Delta S$ indicates a Frenet longitudinal distance between path control points. In addition, there are $m \approx [d/\Delta S]$ control points within a safety distance $d$ in front and rear of longitudinal displacements of the control points closet to the obstacle. In this case, lateral displacements of the control points closet to the obstacle are at least a safety distance threshold $r_{\text{safety}}$, greater than a lateral displacement of the obstacle, to ensure that the host vehicle does not collide with the obstacle along an obstacle avoidance path. (In the formula, $[\cdot]$ indicates a rounding symbol). Finally, an optimal obstacle avoidance path planning problem is described as an optimal quadratic programming problem shown in the following (left obstacle avoidance is used as an example), that is:

$$\text{Minimize } \Sigma^2 = p_1 S^2 + p_2 K^2 + p_3 P^2 \qquad (15 - 2)$$

$$s.t. D_r \leq L_k \leq D_l, k = 1,2,\dots, j - m - 1, j + m + 1, \dots, n + 1$$

$$L_{obst} + r_{\text{safety}} \leq L_k \leq D_l, k = j - m, \dots, j, \dots j + m$$

In the formula, $L_k$ represents a Frenet horizontal coordinate value of a path control point, $L_{obst}$ represents a Frenet horizontal coordinate value of the obstacle, and $D_l$ and $D_r$ respectively represent Frenet horizontal coordinate values of a left boundary and a right boundary of a road.

Based on an obstacle constraint condition and a road boundary constraint, an L matrix of a target path that minimizes a quadratic form of the path length, the curvature, and the course angle error is determined.

406. Convert the target path based on the Frenet coordinate system into the Cartesian coordinate system.

Finally, an optimal path obtained through solving is converted from the Frenet coordinates back to the Cartesian coordinates according to formula (4), and the optimal path is then transferred to a path following module, to deliver instructions to a bottom-layer control module.

For example, the following describes the path planning method provided in this embodiment of this application by using an example.

Step 1: Construct a mapping relationship between the Cartesian coordinates and the Frenet coordinates.

It is assumed that the road centerline is a cubic polynomial curve, a road length is about L = 250 m, a curvature at a start of the road is 0, a curvature at an end of the road is $C_f$ = 1/800, and a curvature change rate of the road is $C = (C_f - C_0)/L = $ 1/200000. A lateral displacement equation of the road centerline is set to:

$$y_r = \frac{1}{6}Cx_r{}^3 = \frac{1}{1200000}x_r{}^3 \qquad (16)$$

A Cartesian horizontal coordinate X is sampled on the centerline with a spacing of 1, that is, $x_r$ = 0: 1: 250, and there are a total of $n$ = 251 sampling points. A value of a Cartesian vertical coordinate Y is calculated according to formula (16), a distance between adjacent sampling points is approximately calculated by using the Pythagorean theorem, a reference path vector $s$ is obtained through accumulation, and an initial value is $s[0]$ = 0.

$$s[i] = s[i-1] + \text{sqrt}((x_r[i] - x_r[i-1])^2 + (y_r[i] - y_r[i-1])^2), i = 1,2,\ldots n \quad (17)$$

A road course angle (an initial value $\vartheta_r[0]$ = 0) is obtained.

$$\vartheta_r[i] = \arctan\frac{y_r[i] - y_r[i-1]}{x_r[i] - x_r[i-1]}, i = 1,2,\ldots n \qquad (18)$$

According to a cubic spline curve interpolation method, a functional relation between a Cartesian horizontal coordinate $X$ and the path vector s, a functional relation between a Cartesian vertical coordinate $Y$ and the path vector s, and a relation between a course angle $\theta_r$ of the road centerline and the path vector s are obtained.

$$\begin{cases} f_{rx} = SplineInterpolation(s, x_r) \\ f_{ry} = SplineInterpolation(s, y_r) \\ f_{r\theta} = SplineInterpolation(s, \theta_r) \end{cases} \qquad (19)$$

A normal vector of a corresponding sampling point on the road centerline is calculated: $e_n = (\chi, \sigma)$.

$$\chi = \frac{-f_{ry}{}'(s)}{\sqrt{f_{rx}{}'^2(s) + f_{ry}{}'^2(s)}}, \sigma = \frac{f_{rx}{}'(s)}{\sqrt{f_{rx}{}'^2(s) + f_{ry}{}'^2(s)}} \qquad (20)$$

Similarly, a functional relation between a normal vector component of the road centerline and a distance is also constructed:

$$\begin{cases} f_{r\chi} = SplineInterpolation(s, \chi) \\ f_{r\sigma} = SplineInterpolation(s, \sigma) \end{cases} \qquad (21)$$

A conversion relationship between any Frenet coordinates $(s, L)$ and corresponding Cartesian coordinates $(x, y)$ is as follows:

$$x(s) = x_r(s) + L\chi$$
$$y(s) = y_r(s) + L\sigma \qquad (22)$$

Step 2: Combine Cartesian coordinates and Frenet coordinates to describe a path.

It is assumed that the path includes N segments of continuous short paths formed by N + 1 control nodes, longitudinal distances between the nodes are evenly distributed, $S = [0,2.5,5, ... ,120]^T$, and N = 48. A path node ($X, Y$) is expressed in a vector form according to formula (22):

$$\begin{cases} X(S) = X_r(S) + diag[\{K_{1,i}\}]L \\ Y(S) = Y_r(S) + diag[\{K_{2,i}\}]L \end{cases}, i = 1,2, ... , N + 1 \qquad (23)$$

Calculation is performed according to formula (21).

$$K_{1,i} = f_{r\chi}(S[i]), K_{2,i} = f_{r\sigma}(S[i])$$

diag[·] indicates a diagonal matrix generated based on elements in brackets, $L = [L_1 \, L_2 \cdots L_N \, L_{N+1}]^T$ indicates a horizontal coordinate of each path node in the Frenet coordinate system, and L indicates the path decision vector.

Step 3: Express the path length, the curvature, and the course angle error in a quadratic form.

The path length, the curvature, and the course angle error are expressed in a quadratic form, that is, the highest order of the variable L is quadratic.

According to formula (7), a quadratic term of the path is expressed as:

$$S^2 = L^T KL + ML + cost \qquad (24)$$

In the formula,

$$\mathbf{K} = \mathcal{g}^T \mathrm{diag}[\alpha_i{}^T \alpha_i + \beta_i{}^T \beta_i]\mathcal{g}, \mathbf{M} = 2\Delta^T \mathrm{diag}[\gamma_i]\mathcal{g}$$

$$\alpha_i = [-K_{1i} \quad K_{1,i+1}], \beta_i = [-K_{2,i} \quad K_{2,i+1}], \gamma_i = [\alpha_i \quad \beta_i]^T,$$

$$\Delta_i = [\Delta X_{ri} \quad \Delta Y_{ri}]^T, \mathcal{g} = \underbrace{\begin{bmatrix} 1 & & & & & & \\ & 1 & & & & & \\ & 1 & & & & & \\ & & & 1 & & & \\ & & & 1 & & & \\ \vdots & \ddots & \ddots & \ddots & \ddots & \ddots & \ddots \\ & & & & & 1 & \\ & & & & & 1 & \\ & & & & & & 1 \end{bmatrix}}_{2N \times (N+1)}$$

According to formula (12), a quadratic term of the curvature is expressed as:

$$K^2 = L^T NL + TL + cost \qquad (25)$$

In the formula,

$$N = H^T H$$

$$T = 2\left(X_r{}^T H^T H\right) diag[\chi_i] + 2\left(Y_r{}^T H^T H\right) diag[\sigma_i]$$

$$
H = 6 \left( \begin{bmatrix} -1 & 1 & & & & & \\ & -1 & 1 & & & & \\ & & -1 & 1 & & & \\ & & & -1 & 1 & & \\ \vdots & \ddots & \ddots & \ddots & \ddots & \ddots & \ddots \\ & & & & & -1 & 1 \\ & & & & & & -1 & 1 \end{bmatrix}}_{N\times(N+1)} \right.
$$

$$
\left. - \underbrace{\begin{bmatrix} 2 & 1 & & & & \\ & 2 & 1 & & & \\ & & 2 & 1 & & \\ & & & 2 & 1 & \\ \vdots & \ddots & \ddots & \ddots & \ddots & \ddots & \ddots \\ & & & & 2 & 1 \\ & & & & & 2 & 1 \end{bmatrix}}_{N\times(N+1)} \underbrace{\begin{bmatrix} 2 & 1 & & & & \\ 1 & 4 & 1 & & & \\ & 1 & 4 & 1 & & \\ & & 1 & 4 & 1 & \\ \vdots & \ddots & \ddots & \ddots & \ddots & \ddots & \ddots \\ & & & 1 & 4 & 1 \\ & & & & 1 & 2 \end{bmatrix}^{-1}}_{(N+1)\times(N+1)} \underbrace{\begin{bmatrix} -1 & 1 & & & & \\ -1 & 0 & 1 & & & \\ & -1 & 0 & 1 & & \\ & & -1 & 0 & 1 & \\ \vdots & \ddots & \ddots & \ddots & \ddots & \ddots & \ddots \\ & & & -1 & 0 & 1 \\ & & & & -1 & 1 \end{bmatrix}}_{(N+1)\times(N+1)} \right)
$$

According to formula (14), a quadratic term of the path course angle error is expressed as:

$$P^2 = L^T Q L + P L + cost \qquad (26)$$

In the formula,

$$Q = G^T G, P = 2\vartheta_r{}^T G, \vartheta_r = f_{r\theta}(S)$$

$$
G = 3 \underbrace{\begin{bmatrix} 2 & 1 & & & & \\ 1 & 4 & 1 & & & \\ & 1 & 4 & 1 & & \\ & & 1 & 4 & 1 & \\ \vdots & \ddots & \ddots & \ddots & \ddots & \ddots & \ddots \\ & & & 1 & 4 & 1 \\ & & & & 1 & 2 \end{bmatrix}^{-1}}_{(N+1)\times(N+1)} \underbrace{\begin{bmatrix} -1 & 1 & & & & \\ -1 & 0 & 1 & & & \\ & -1 & 0 & 1 & & \\ & & -1 & 0 & 1 & \\ \vdots & \ddots & \ddots & \ddots & \ddots & \ddots \\ & & & -1 & 0 & 1 \\ & & & & -1 & 1 \end{bmatrix}}_{(N+1)\times(N+1)}
$$

Step 4: Plan an obstacle avoidance path by using an optimal quadratic programming method.

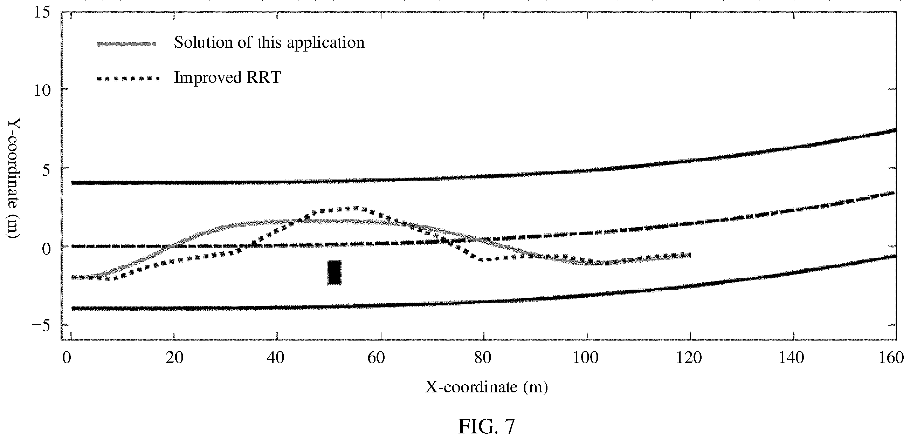

As shown in FIG. 7, it is assumed that the obstacle is located at a position 50 m in front of the host vehicle that is in the same lane as the obstacle, a lateral displacement between the center of the obstacle and the road centerline is $L_{obst}$ = -2$m$, and a target point of the path is set to a position 120 m in front of the host vehicle. A sequence number $j \approx \text{ceil}\left[\frac{49}{2.5}\right] = 20$ (in the formula, ceil is a round-up function) of control points closest to the obstacle is roughly estimated based on a current location relationship. In addition, because there are $m \approx \text{ceil}\left[\frac{20}{2.5}\right] = 8$ control points within a safety distance d = 20m in front and rear of longitudinal displacements of the control points closet to the obstacle, lateral displacements of the control points closet to the obstacle are at least a safety distance threshold $r_{safety}$ = 2$m$, greater than a lateral displacement of the obstacle, to ensure that the host vehicle does not collide with the obstacle along an obstacle avoidance path. $D_r$ and $D_l$ are set to -2.5 m and 2.5 m, respectively. Finally, an obstacle avoidance path planning problem may be expressed in the following quadratic form:

$$\Sigma^2 = p_1 S^2 + p_2 K^2 + p_3 P^2 = L^T(p_1 K + p_1 N + p_3 G)L + (p_1 M + p_2 T + p_3 P)L \quad (27)$$

$$s.t. \ \ D_r \le L_k \le D_l, k = 1,2,\ldots,11,29,\ldots,49$$

$$0 = L_{obst} + r_{\text{safety}} \leq L_k \leq D_l, k = 12, \ldots, 20, \ldots 28$$

Corresponding weights are $p_1 = 0.1, p_2 = 0.8, p_3 = 0.1$, respectively. In MATLAB, a quadratic programming optimization function (quadprog) is solved by using a QP problem to obtain the optimal path, and then Frenet coordinates of the path are converted into Cartesian coordinates according to formula (23).

FIG. 7 is a schematic diagram of planning of the obstacle avoidance path on a curved road in this embodiment of this application.

According to a path planning algorithm provided in this application, a safe path for avoiding an obstacle can be successfully planned, and allow returning to an original lane to reach a destination point. A shape of an entire obstacle avoidance path is very natural. Compared with an improved RRT algorithm in which a path course constraint is considered, from a perspective of a visual overall planning effect, the solution in this application has the most natural planning effect and a smooth path transition.

As shown in Table 1, it can be learned by comparing distributions of path quality indicator values including the path length, an average value of the path curvature, and a lateral safety value (an average value of lateral distances between the path and the center of the obstacle), in the solution of this application, path quality is optimal, the path length is the shortest, the path curvature is better, and a lateral safety value is higher.

**Table 1 Comparison of path indicators**

| Planning method | Solution of this application | Improved RRT |
|---|---|---|
| Path length | 120.37 | 120.57 |
| Average value of a curvature | 0.0057 | 0.0202 |
| Lateral safety value | 2.1635 | 1.7737 |

In addition, as shown in Table 2, solving speeds of overall planning of the two methods are compared. It is tested that the planning method in this application takes only 22 ms, which is far less than time consumed by the planning method of the improved RRT.

**Table 2 Comparison of time required for planning and solving**

| Planning method | Solution of this application | Improved RRT |
|---|---|---|
| Time required for solving | 22 ms | 125 ms |

An obstacle avoidance path generated by using the path planning method provided in this embodiment of this application has a natural shape, favorable path quality indicators, and the shortest solving time.

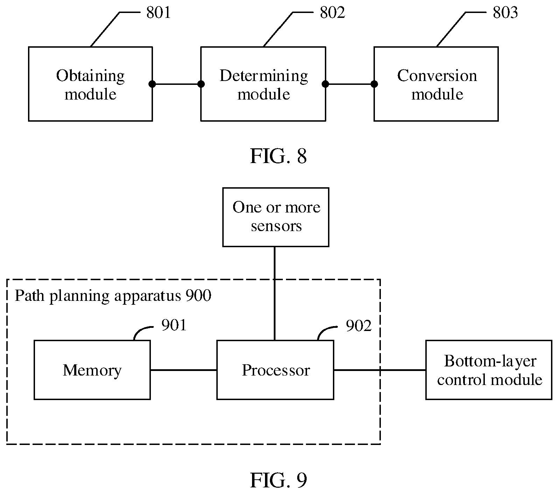

The foregoing describes the path planning method provided in this application, and the following describes a path planning apparatus for implementing the path planning method. FIG. 8 is a schematic diagram of an embodiment of the path planning apparatus according to an embodiment of this application.

The path planning apparatus includes:

an obtaining module 801, configured to obtain road information, an initial location of a target object, and a destination location;

a determining module 802, configured to determine a Cartesian coordinate system, a Frenet coordinate system, and a mapping relationship between the Cartesian coordinate system and the Frenet coordinate system based on the road information, where

the obtaining module 801 is further configured to obtain, based on the mapping relationship, a path quality indicator function based on the Frenet coordinate system, where the path quality indicator function is a quadratic function; and

the determining module 802 is further configured to determine a target path based on the Frenet coordinate system by using optimal quadratic programming and based on the path quality indicator function based on the Frenet coordinate system, the initial location of the target object, and the destination location; and

a conversion module 803, configured to convert the target path into the Cartesian coordinate system based on the mapping relationship, where the target path is used for path planning and control of the target object.

Optionally, the determining module 802 is specifically configured to determine a road boundary constraint condition based on the road information, and determine, under constraint of the road boundary constraint condition, the target path based on the Frenet coordinate system by using a quadratic programming solution method.

Optionally, the obtaining module 801 is further configured to obtain obstacle information; and the determining module 802 is specifically configured to determine, under an obstacle constraint condition determined based on the obstacle information, the target path based on the Frenet coordinate system by using the quadratic programming solution method.

Optionally, the determining module 802 is specifically configured to determine a plurality of control nodes on the target path by using the quadratic programming solution method, and determine, based on the plurality of control nodes and in a manner of interpolation, any path point other than the plurality of control nodes on the target path.

Optionally, the manner of interpolation includes natural cubic spline curve interpolation.

Optionally, the path quality indicator function includes one or a combination of a path length function, a curvature function, a course angle error function, a curvature change rate function, and a course angle error change rate function.

Optionally, the obtaining module 801 is specifically configured to determine the path quality indicator function based on preset weights of a plurality of path quality indicators.

Optionally, the Cartesian coordinate system includes a vehicle body coordinate system, a topocentric coordinate system, or a world coordinate system.

Only one or more of the modules in FIG. 8 may be implemented by using software, hardware, firmware, or a combination thereof, and at least one is implemented by hardware. The software or firmware includes but is not limited to a computer program instruction or code, and may be executed by a hardware processor. The hardware includes but is not limited to various integrated circuits, for example, a central processing unit (CPU), a digital signal processor (DSP), a field programmable gate array (FPGA), or an application-specific integrated circuit (ASIC).

FIG. 9 is a schematic diagram of an embodiment of a path planning apparatus according to an embodiment of this application.

As shown in FIG. 9, the path planning apparatus 900 includes a memory 901 and a processor 902. The memory 901 stores computer program instructions, and the processor 902 runs the computer program instructions to perform operations related to path planning described in the foregoing embodiments. The processor 902 is further connected to one or more sensors outside the path planning apparatus 900, and receives raw data that is of an environment around a vehicle and that is detected by the sensors. The sensor includes but is not limited to a camera, a laser radar, an ultrasonic radar, or a millimeter wave radar. A target path output by the path planning apparatus 900 is usually sent to a bottom-layer control module of an intelligent driving vehicle, to provide vehicle control reference information. The bottom-layer control module may also be a software module executed by the processor 902 or integrated into the processor 902, which is not limited in this embodiment. The processor 902 includes but is not limited to various CPUs, a DSP, a microcontroller, a microprocessor, or an artificial intelligence processor.

The path planning apparatuses shown in FIG. 8 and FIG. 9 construct a mapping relationship between a Cartesian coordinate system and a Frenet coordinate system, and determines an optimization target of a path quality indicator to be a quadratic programming problem, so that a target path based on the Frenet coordinate system can be easily obtained. Finally, the target path can be converted back to the Cartesian coordinate system based on the mapping relationship, so that the bottom-layer control module performs a control operation. In this solution, a target path with optimal path quality indicators may be obtained by using a quadratic programming solution method, and quality of the target path may be improved. The obtained target path better conforms to an actual moving scenario of a moving target object, especially a vehicle.

**Claims**

1. A path planning method, comprising:

   obtaining road information, an initial location of a target object, and a destination location;
   determining a Cartesian coordinate system and obtaining a road centerline based on the Cartesian coordinate system, determining a Frenet coordinate system based on a road reference line, which may be the road centerline, and determining a mapping relationship between the Cartesian coordinate system and the Frenet coordinate system based on the road information;
   obtaining, based on the mapping relationship, a path quality indicator function based on the Frenet coordinate system, wherein the path quality indicator function is a quadratic function;
   determining a target path based on the Frenet coordinate system by using quadratic programming and based on the path quality indicator function, the initial location of the target object, and the destination location; and
   converting the target path into the Cartesian coordinate system based on the mapping relationship, wherein the target path is used for path planning and control of the target object.

2. The method according to claim 1, wherein

the determining a target path based on the Frenet coordinate system by using quadratic programming and based on the path quality indicator function based on the Frenet coordinate system, the initial location of the target object, and the destination location comprises:

> determining a road boundary constraint condition based on the road information; and
> under constraint of the road boundary constraint condition, determining the target path based on the Frenet coordinate system by using a quadratic programming solution method.

3. The method according to claim 1, wherein
the method further comprises:

> obtaining obstacle information; and
> the determining a target path based on the Frenet coordinate system by using quadratic programming and based on the path quality indicator function based on the Frenet coordinate system, the initial location of the target object, and the destination location comprises:
> under an obstacle constraint condition determined based on the obstacle information, determining the target path based on the Frenet coordinate system by using a quadratic programming solution method.

4. The method according to claim 1, wherein
the determining a target path based on the Frenet coordinate system by using quadratic programming and based on the path quality indicator function based on the Frenet coordinate system, the initial location of the target object, and the destination location comprises:

> determining a plurality of control nodes on the target path by using a quadratic programming solution method; and
> determining, based on the plurality of control nodes and in a manner of interpolation, any path point other than the plurality of control nodes on the target path.

5. The method according to claim 4, wherein
the manner of interpolation comprises natural cubic spline curve interpolation.

6. The method according to any one of claims 1 to 5, wherein
the path quality indicator function comprises one or a combination of more of a path length function, a curvature function, a course angle error function, a curvature change rate function, and a course angle error change rate function, and a course angle error is used to indicate a deviation between a course angle at which the target object drives along a candidate path and a course angle at which the target object drives along a road reference line.

7. The method according to claim 6, wherein
the obtaining, based on the mapping relationship, a path quality indicator function based on the Frenet coordinate system comprises:
determining the path quality indicator function based on preset weights of a plurality of path quality indicators.

8. The method according to any one of claims 1 to 7, wherein
the Cartesian coordinate system comprises:
a vehicle body coordinate system, a topocentric coordinate system, or a world coordinate system.

9. A path planning apparatus, comprising:

> an obtaining module (801), configured to obtain road information, an initial location of a target object, and a destination location;
> a determining module (802), configured to determine the Cartesian coordinate system, a Frenet coordinate system based on a road reference line, which may be the road centerline, and a mapping relationship between the Cartesian coordinate system and the Frenet coordinate system based on the road information,
> wherein the path planning apparatus is configured to obtain a road centerline based on the Cartesian coordinate system
> and the obtaining module (801) is further configured to obtain, based on the mapping relationship, a path quality indicator function based on the Frenet coordinate system, wherein the path quality indicator function is a quadratic function; and
> the determining module (802) is further configured to determine a target path based on the Frenet coordinate system by using quadratic programming and based on the path quality indicator function, the initial location of the target object, and the destination location; and

by comprising a conversion module (803), configured to convert the target path into the Cartesian coordinate system based on the mapping relationship, wherein the target path is used for path planning and control of the target object,

wherein at least one of the obtaining module (801), the determining module (802) and the conversion module (803) is implemented by hardware.

10. The apparatus according to claim 9, wherein the determining module is specifically configured to:

determine a road boundary constraint condition based on the road information; and
under constraint of the road boundary constraint condition, determine the target path based on the Frenet coordinate system by using a quadratic programming solution method.

11. The apparatus according to claim 9 or 10, wherein the obtaining module is further configured to:

obtain obstacle information; and
the determining module is specifically configured to determine, under an obstacle constraint condition determined based on the obstacle information, the target path based on the Frenet coordinate system by using the quadratic programming solution method.

12. The apparatus according to any one of claims 9 to 11, wherein
the determining module is specifically configured to:

determine a plurality of control nodes on the target path by using the quadratic programming solution method; and
determine, based on the plurality of control nodes and in a manner of interpolation, any path point other than the plurality of control nodes on the target path.

13. A path planning apparatus (900), comprising a processor (902) and a memory (901), wherein the processor (902) and the memory (901) are connected to each other, the memory (901) is configured to store a computer program, the computer program comprises program instructions, and the processor (902) is configured to invoke the program instructions to perform the method according to any one of claims 1 to 8.

14. A computer program product comprising instructions, wherein when the computer program product is run on a computer, the computer is enabled to perform the method according to any one of claims 1 to 8.

15. A computer-readable storage medium, comprising instructions, wherein when the instructions are run on a computer, the computer is enabled to perform the method according to any one of claims 1 to 8.

**Patentansprüche**

1. Wegplanungsverfahren, umfassend:

Erlangen von Straßeninformationen, eines anfänglichen Orts eines Zielobjekts und eines Anlangungsorts;
Bestimmen eines kartesischen Koordinatensystems und Erlangen einer Straßenmittellinie basierend auf dem kartesischen Koordinatensystem, Bestimmen eines Frenet-Koordinatensystems basierend auf einer Straßenbezugslinie, welche die Straßenmittellinie sein kann, und Bestimmen einer Abbildungsbeziehung zwischen dem kartesischen Koordinatensystem und dem Frenet-Koordinatensystem basierend auf den Straßeninformationen;
Erlangen, basierend auf der Zuordnungsbeziehung, einer Wegqualitätsindikatorfunktion basierend auf dem Frenet-Koordinatensystem, wobei die Wegqualitätsindikatorfunktion eine quadratische Funktion ist;
Bestimmen eines Zielwegs basierend auf dem Frenet-Koordinatensystem unter Verwendung einer quadratischen Programmierung und basierend auf der Wegqualitätsindikatorfunktion, dem anfänglichen Ort des Zielobjekts und dem Anlangungsort; und
Umwandeln des Zielwegs in das kartesische Koordinatensystem basierend auf der Abbildungsbeziehung, wobei der Zielweg zur Wegplanung und Steuerung des Zielobjekts verwendet wird.

2. Verfahren nach Anspruch 1, wobei

das Bestimmen eines Zielwegs basierend auf dem Frenet-Koordinatensystem unter Verwendung einer quadratischen Programmierung und basierend auf der Wegqualitätsindikatorfunktion basierend auf dem Frenet-Koordinatensystem, dem anfänglichen Ort des Zielobjekts und dem Anlangungsort Folgendes umfasst:

Bestimmen einer Straßenbegrenzungseinschränkungsbedingung basierend auf den Straßeninformationen; und
eingeschränkt durch die Straßenbegrenzungseinschränkungsbedingung, Bestimmen des Zielwegs basierend auf dem Frenet-Koordinatensystem unter Verwendung eines quadratischen Programmierlösungsverfahrens.

3. Verfahren nach Anspruch 1, wobei
das Verfahren ferner Folgendes umfasst:

Erlangen von Hindernisinformationen; und
das Bestimmen eines Zielwegs basierend auf dem Frenet-Koordinatensystem unter Verwendung einer quadratischen Programmierung und basierend auf der Wegqualitätsindikatorfunktion basierend auf dem Frenet-Koordinatensystem, dem anfänglichen Ort des Zielobjekts und dem Anlangungsort Folgendes umfasst:
unter einer Hinderniseinschränkungsbedingung, die basierend auf den Hindernisinformationen bestimmt wird, Bestimmen des Zielwegs basierend auf dem Frenet-Koordinatensystem unter Verwendung eines quadratischen Programmierlösungsverfahrens.

4. Verfahren nach Anspruch 1, wobei
das Bestimmen eines Zielwegs basierend auf dem Frenet-Koordinatensystem unter Verwendung einer quadratischen Programmierung und basierend auf der Wegqualitätsindikatorfunktion basierend auf dem Frenet-Koordinatensystem, dem anfänglichen Ort des Zielobjekts und dem Anlangungsort Folgendes umfasst:

Bestimmen einer Vielzahl von Steuerungsknoten auf dem Zielweg unter Verwendung eines quadratischen Programmierlösungsverfahrens; und
Bestimmen, basierend auf der Vielzahl von Steuerungsknoten und in einer Weise einer Interpolation, eines beliebigen anderen Wegpunkts als der Vielzahl von Steuerungsknoten auf dem Zielweg.

5. Verfahren nach Anspruch 4, wobei
die Weise der Interpolation eine natürliche kubische Spline-Kurveninterpolation umfasst.

6. Verfahren nach einem der Ansprüche 1 bis 5, wobei
die Wegqualitätsindikatorfunktion eine oder eine Kombination von mehr als einer Weglängenfunktion, einer Krümmungsfunktion, einer Kurswinkelfehlerfunktion, einer Krümmungsänderungsratenfunktion und einer Kurswinkelfehleränderungsratenfunktion umfasst und ein Kurswinkelfehler dazu verwendet wird, eine Abweichung zwischen einem Kurswinkel, bei dem das Zielobjekt entlang eines möglichen Wegs fährt, und einem Kurswinkel, bei dem das Zielobjekt entlang einer Straßenbezugslinie fährt, anzugeben.

7. Verfahren nach Anspruch 6, wobei
das Erlangen, basierend auf der Zuordnungsbeziehung, einer Wegqualitätsindikatorfunktion basierend auf dem Frenet-Koordinatensystem Folgendes umfasst:
Bestimmen der Wegqualitätsindikatorfunktion basierend auf voreingestellten Gewichten einer Vielzahl von Wegqualitätsindikatoren.

8. Verfahren nach einem der Ansprüche 1 bis 7, wobei
das kartesische Koordinatensystem Folgendes umfasst:
ein Fahrzeugkörperkoordinatensystem, ein topozentrisches Koordinatensystem oder ein Weltkoordinatensystem.

9. Wegplanungsgerät, umfassend:

ein Erlangungsmodul (801), das dazu konfiguriert ist, Straßeninformationen, einen anfänglichen Ort eines Zielobjekts und einen Anlangungsort zu erlangen;
ein Bestimmungsmodul (802), das dazu konfiguriert ist, das kartesische Koordinatensystem, ein Frenet-Koordinatensystem basierend auf einer Straßenbezugslinie, welche die Straßenmittellinie sein kann, und eine Abbildungsbeziehung zwischen dem kartesischen Koordinatensystem und dem Frenet-Koordinatensystem basierend auf den Straßeninformationen zu bestimmen,

wobei das Wegplanungsgerät dazu konfiguriert ist, eine Straßenmittellinie basierend auf dem kartesischen Koordinatensystem zu erlangen, und das Erlangungsmodul (801) ferner dazu konfiguriert ist, basierend auf der Abbildungsbeziehung eine Wegqualitätsindikatorfunktion basierend auf dem Frenet-Koordinatensystem zu erlangen, wobei die Wegqualitätsindikatorfunktion eine quadratische Funktion ist; und

das Bestimmungsmodul (802) ferner dazu konfiguriert ist, einen Zielweg basierend auf dem Frenet-Koordinatensystem unter Verwendung einer quadratischen Programmierung und basierend auf der Wegqualitätsindikatorfunktion, dem anfänglichen Ort des Zielobjekts und dem Anlangungsort zu bestimmen; und

durch Umfassen eines Umwandlungsmoduls (803) dazu konfiguriert ist, den Zielweg basierend auf der Abbildungsbeziehung in das kartesische Koordinatensystem umzuwandeln, wobei der Zielweg zur Wegplanung und Steuerung des Zielobjekts verwendet wird,

wobei mindestens eines des Erlangungsmoduls (801), des Bestimmungsmoduls (802) und des Umwandlungsmoduls (803) durch Hardware umgesetzt ist.

10. Gerät nach Anspruch 9, wobei das Bestimmungsmodul speziell zu Folgendem konfiguriert ist:

Bestimmen einer Straßenbegrenzungseinschränkungsbedingung basierend auf den Straßeninformationen; und

eingeschränkt durch die Straßenbegrenzungseinschränkungsbedingung, Bestimmen des Zielwegs basierend auf dem Frenet-Koordinatensystem unter Verwendung eines quadratischen Programmierlösungsverfahrens.

11. Gerät nach Anspruch 9 oder 10, wobei das Erlangungsmodul ferner zu Folgendem konfiguriert ist:

Erlangen von Hindernisinformationen; und

das Bestimmungsmodul speziell dazu konfiguriert ist, unter einer Hinderniseinschränkungsbedingung, die basierend auf den Hindernisinformationen bestimmt wird, den Zielweg basierend auf dem Frenet-Koordinatensystem unter Verwendung des quadratischen Programmierlösungsverfahrens zu bestimmen.

12. Gerät nach einem der Ansprüche 9 bis 11, wobei das Bestimmungsmodul speziell zu Folgendem konfiguriert ist:

Bestimmen einer Vielzahl von Steuerungsknoten auf dem Zielweg unter Verwendung des quadratischen Programmierlösungsverfahrens; und

Bestimmen, basierend auf der Vielzahl von Steuerungsknoten und in einer Weise einer Interpolation, eines beliebigen anderen Wegpunkts als der Vielzahl von Steuerungsknoten auf dem Zielweg.

13. Wegplanungsgerät (900), umfassend einen Prozessor (902) und einen Speicher (901), wobei der Prozessor (902) und der Speicher (901) miteinander verbunden sind, der Speicher (901) dazu konfiguriert ist, ein Computerprogramm zu speichern, das Computerprogramm Programmanweisungen umfasst und der Prozessor (902) dazu konfiguriert ist, die Programmanweisungen aufzurufen, um das Verfahren nach einem der Ansprüche 1 bis 8 durchzuführen.

14. Computerprogrammprodukt, umfassend Anweisungen, wobei, wenn das Computerprogrammprodukt auf einem Computer ausgeführt wird, es dem Computer ermöglicht wird, das Verfahren nach einem der Ansprüche 1 bis 8 durchzuführen.

15. Computerlesbares Speichermedium, umfassend Anweisungen, wobei, wenn die Anweisungen auf einem Computer ausgeführt werden, es dem Computer ermöglicht wird, das Verfahren nach einem der Ansprüche 1 bis 8 durchzuführen.

**Revendications**

1. Procédé de planification de trajet, comprenant :

l'obtention d'informations routières, d'un emplacement initial d'un objet cible, et d'un emplacement de destination ;

la détermination d'un système de coordonnées cartésiennes et l'obtention d'une ligne médiane de route basé sur le système de coordonnées cartésiennes, la détermination d'un système de coordonnées de Frenet sur la base d'une ligne de référence de route, qui peut être la ligne médiane de la route, et la détermination d'une relation de mappage entre le système de coordonnées cartésiennes et le système de coordonnées de Frenet sur la base des informations routières ;

l'obtention, sur la base de la relation de mappage, d'une fonction indicatrice de qualité de trajet sur la base du système de coordonnées de Frenet, dans lequel la fonction indicatrice de qualité de trajet est une fonction quadratique ;

la détermination d'un trajet cible sur la base du système de coordonnées de Frenet à l'aide de la programmation quadratique et sur la base de la fonction indicatrice de qualité de trajet, de l'emplacement initial de l'objet cible et de l'emplacement de destination ; et

la conversion du trajet cible dans le système de coordonnées cartésiennes sur la base de la relation de mappage, dans lequel le trajet cible est utilisé pour la planification et la commande du trajet de l'objet cible.

2. Procédé selon la revendication 1, dans lequel

la détermination d'un trajet cible sur la base du système de coordonnées de Frenet à l'aide de la programmation quadratique et sur la base de la fonction indicatrice de qualité de trajet basée sur le système de coordonnées de Frenet, de l'emplacement initial de l'objet cible, et de l'emplacement de destination comprend :

la détermination d'une condition de contrainte de limite de route sur la base des informations routières ; et

sous la contrainte de la condition de contrainte de limite de route, la détermination du trajet cible sur la base du système de coordonnées de Frenet à l'aide d'un procédé de solution de programmation quadratique.

3. Procédé selon la revendication 1, dans lequel le procédé comprend également :

l'obtention d'informations d'obstacles ; et

la détermination d'un trajet cible sur la base du système de coordonnées de Frenet à l'aide de la programmation quadratique et sur la base de la fonction indicatrice de qualité de trajet basée sur le système de coordonnées de Frenet, de l'emplacement initial de l'objet cible, et de l'emplacement de destination comprend :

sous la contrainte de la condition de contrainte d'obstacle déterminée sur la base des informations d'obstacles, la détermination du trajet cible sur la base du système de coordonnées de Frenet à l'aide d'un procédé de solution de programmation quadratique.

4. Procédé selon la revendication 1, dans lequel

la détermination d'un trajet cible sur la base du système de coordonnées de Frenet à l'aide de la programmation quadratique et sur la base de la fonction indicatrice de qualité de trajet basée sur le système de coordonnées de Frenet, de l'emplacement initial de l'objet cible, et de l'emplacement de destination comprend :

la détermination d'une pluralité de nœuds de commande sur le trajet cible à l'aide d'un procédé de solution de programmation quadratique ; et

la détermination, sur la base de la pluralité de nœuds de commande et de manière interpolée, d'un quelconque point de trajet autre que la pluralité de nœuds de commande sur le trajet cible.

5. Procédé selon la revendication 4, dans lequel

la manière interpolée comprend l'interpolation de courbes splines cubiques naturelles.

6. Procédé selon l'une quelconque des revendications 1 à 5, dans lequel

la fonction indicatrice de qualité de trajet comprend une ou une combinaison de plusieurs fonctions parmi une fonction de longueur de trajet, une fonction de courbure, une fonction d'erreur d'angle de parcours, une fonction de taux de changement de courbure, et une fonction de taux de changement d'erreur d'angle de parcours, et une erreur d'angle de parcours est utilisée pour indiquer un écart entre un angle de parcours auquel l'objet cible se déplace le long d'un trajet candidat et un angle de parcours auquel l'objet cible se déplace le long d'une ligne de référence de route.

7. Procédé selon la revendication 6, dans lequel

l'obtention, sur la base de la relation de mappage, d'une fonction indicatrice de qualité de trajet sur la base du système de coordonnées de Frenet comprend :

la détermination de la fonction indicatrice de qualité de trajet sur la base de pondérations prédéfinies d'une pluralité d'indicateurs de qualité de trajet.

8. Procédé selon l'une quelconque des revendications 1 à 7, dans lequel

le système de coordonnées cartésiennes comprend :
un système de coordonnées de carrosserie de véhicule, un système de coordonnées topocentriques, ou un système de coordonnées mondiales.

9. Appareil de planification de trajet, comprenant :

un module d'obtention (801), configuré pour obtenir des informations routières, un emplacement initial d'un objet cible, et un emplacement de destination ;
un module de détermination (802), configuré pour déterminer le système de coordonnées cartésiennes, le système de coordonnées de Frenet sur la base d'une ligne de référence de route, qui peut être la ligne médiane de la route, et une relation de mappage entre le système de coordonnées cartésiennes et le système de coordonnées de Frenet sur la base des informations routières,
dans lequel l'appareil de planification de trajet est configuré pour obtenir une ligne médiane de route sur la base du système de coordonnées cartésiennes et le module d'obtention (801) est également configuré pour obtenir, sur la base de la relation de mappage, une fonction indicatrice de qualité de trajet basée sur le système de coordonnées de Frenet, dans lequel la fonction indicatrice de qualité de trajet est une fonction quadratique ; et
un module de détermination (802) est également configuré pour déterminer un trajet cible sur la base du système de coordonnées de Frenet à l'aide de la programmation quadratique et sur la base de la fonction indicatrice de qualité de trajet, l'emplacement initial de l'objet cible et l'emplacement de destination ; et
en comprenant le module de conversion (803), configuré pour convertir le trajet cible dans le système de coordonnées cartésiennes sur la base de la relation de mappage, dans lequel le trajet cible est utilisé pour la planification et la commande du trajet de l'objet cible,
dans lequel au moins l'un du module d'obtention (801), du module de détermination (802) et du module de conversion (803) est mis en œuvre par du matériel.

10. Appareil selon la revendication 9, dans lequel le module de détermination est spécifiquement configuré pour :

déterminer une condition de contrainte de limite de route sur la base des informations routières ; et
sous la contrainte de la condition de contrainte de limite de route, déterminer le trajet cible sur la base du système de coordonnées de Frenet à l'aide d'un procédé de solution de programmation quadratique.

11. Appareil selon la revendication 9 ou 10, dans lequel le module d'obtention est également configuré pour :

obtenir des informations d'obstacles ; et
le module de détermination est spécifiquement configuré pour déterminer, sous une contrainte de la condition de contrainte d'obstacle déterminée sur la base des informations d'obstacles, le trajet cible sur la base du système de coordonnées de Frenet à l'aide du procédé de solution de programmation quadratique.

12. Appareil selon l'une quelconque des revendications 9 à 11, dans lequel
le module de détermination est spécifiquement configuré pour :

déterminer une pluralité de nœuds de commande sur le trajet cible à l'aide d'un procédé de solution de programmation quadratique ; et
déterminer, sur la base de la pluralité de nœuds de commande et de manière interpolée, un quelconque point de trajet autre que la pluralité de nœuds de commande sur le trajet cible.

13. Appareil de planification de trajet (900), comprenant un processeur (902) et une mémoire (901), dans lequel le processeur (902) et la mémoire (901) sont connectés l'un à l'autre, la mémoire (901) est configurée pour stocker un programme informatique, le programme informatique comprend des instructions de programme, et le processeur (902) est configuré pour appeler les instructions de programme à réaliser le procédé selon l'une quelconque des revendications 1 à 8.

14. Produit de programme informatique comprenant des instructions, dans lequel lorsque le produit de programme informatique fonctionne sur un ordinateur, l'ordinateur est activé pour réaliser le procédé selon l'une quelconque des revendications 1 à 8.

15. Support de stockage lisible par ordinateur, comprenant des instructions, dans lequel lorsque les instructions fonctionnent sur un ordinateur, l'ordinateur est activé pour réaliser le procédé selon l'une quelconque des revendi-

cations 1 à 8.

FIG. 1

FIG. 2

FIG. 3

Obtain road information, and an initial location and a destination location of a target object — 401

Obtain a road centerline based on a Cartesian coordinate system — 402

Construct a mapping relationship between a path point in the Cartesian coordinate system and a path point in a Frenet coordinate system — 403

Obtain a path quality indicator function — 404

Determine a target path based on the Frenet coordinate system by using an optimal quadratic programming problem of constructing an optimal path based on a path quality indicator — 405

Convert the target path based on the Frenet coordinate system into the Cartesian coordinate system — 406

FIG. 4

FIG. 5

FIG. 6

FIG. 7

| Obtaining module | — 801 | Determining module | — 802 | Conversion module | — 803 |

**FIG. 8**

One or more sensors

Path planning apparatus 900

| Memory | — 901 | Processor | — 902 | Bottom-layer control module |

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Optimal Trajectory Generation for Autonomous Vehicles Under Centripetal Acceleration Constraints for In-lane Driving Scenarios. **ZHANG YAJIA et al.** 2019 IEEE INTELLIGENT TRANSPORTATION SYSTEMS, CONFERENCE (ITSC). IEEE, 27 October 2019, 3619-3626